# EUROPEAN PATENT SPECIFICATION

(11) **EP 0 595 423 B1**
(45) Date of publication and mention of the grant of the patent: **09.07.1997**
(21) Application number: 93202996.0
(22) Date of filing: 26.10.1993
(51) Int. Cl.: A01K 13/00

(54) **Horse rug**
Pferdedecke
Couverture pour chevaux

(30) Priority: 26.10.1992 NL 9201855
(43) Date of publication of application: 04.05.1994
(73) Proprietor: Petiet, Adrianus Hans, NL-4904 MT Oosterhout (NL)
(72) Inventor: Petiet, Adrianus Hans, NL-4904 MT Oosterhout (NL)
(74) Representative: Eveleens Maarse, Pieter

(56) References cited:
- AU-B- 535 781
- US-A- 1 500 316
- US-A- 3 979 886
- US-A- 4 214 421
- US-A- 5 125 220

## Description

The invention relates to a horse blanket comprising a blanket manufactured from flexible material, the form of which, when in use on a horse, is substantially adapted to the form of the horse, comprising substantially symmetrical fixation means connected with the blanket, which, when the blanket is in use on a horse, exert a force on the blanket substantially in the direction of the front of the horse, said fixation means being formed by a pramary girth, consisting of two substantially symmetrical primary girth halves and connected to the horse blanket.

Such horse blankets are known from US-A-5,125,220, US-A-4,214,421 and AU-535781.

In the prior art horse blankets known from these documents a breast girth or band extends along the front part of the horse under the bottom of the neck of the horse. These girths are not however directly connected to the horse blanket.

When the horse walks, the shoulder joints move close to the front legs, which movement is transmitted to the blanket so that a force is hereby exerted on the horse blanket alternatingly on the left and the right, so that the horse blanket is pulled out of position and good fixing of the horse blanket on the animal does not take place because a symmetrical force is not applied to the horse blanket.

The same is otherwise true of horse blankets also known which are fixed by means of girths trained round the stomach. The danger of being pulled askew is considerable here.

The object of the invention is to provide a horse blanket wherein the above stated drawbacks are obviated.

This object is achieved in that said primary girth, when the blanket is used on a horse, is guided from the front part of the horse along the underside of the neck of the horse and extends therefrom towards the rear of the orse on either side of the body of the horse, wherein the primary girth is guided slightly upward and both primary girth halves extend along the withers of the horse.

It should be noted here that during walking of the horse, the horse blanket itself, that is, without the fixation means, is generally subjected to a rearward directed force. This is caused by the hair direction of the coat of the horse, whereby the hair generally extends to the rear and whereby, during movements of the diverse parts of the body of the horse, a rearward directed force is exerted on the horse blanket. These forces are well withstood by the fixation which takes place on the front part of the horse by means of the substantially symmetrical fixation means connected to the horse blanket and running over the underside of the neck of the horse.

According to a first preferred embodiment the girths are guided such to the rear, that the girth extend at either side of the withers.

According to a second embodiment the secondary girths connected to the horse blanket extend from the girth to the rear.

Understood by the word "girth" is not only a girth as in common usage, but also a strap or, when the girth extends along the horse blanket, also a hem or other form of strengthening of the material of the horse blanket. Also falling within the definition of girths employed herein are girths provided with buckles and/or elastic pieces. Further, the action of the girth is substantially improved, when they are made of material that is less flexible than the material from which the horse blanket itself is made.

The invention will now be elucidated with reference to the annexed drawings, in which:
fig. 1 shows a perspective view of a horse with a horse blanket according to a first embodiment of the invention;
fig. 2 shows a partly broken away perspective view of a horse with a horse blanket according to a second embodiment of the invention;
fig. 3 is a perspective view of a horse with a horse blanket according to a third embodiment of the invention;
fig. 4 is a side view of a horse with the horse blanket depicted in fig. 1, wherein the horse is holding its head downward; and
fig. 5 is a perspective view of a horse with a horse blanket according to a fourth embodiment of the invention.

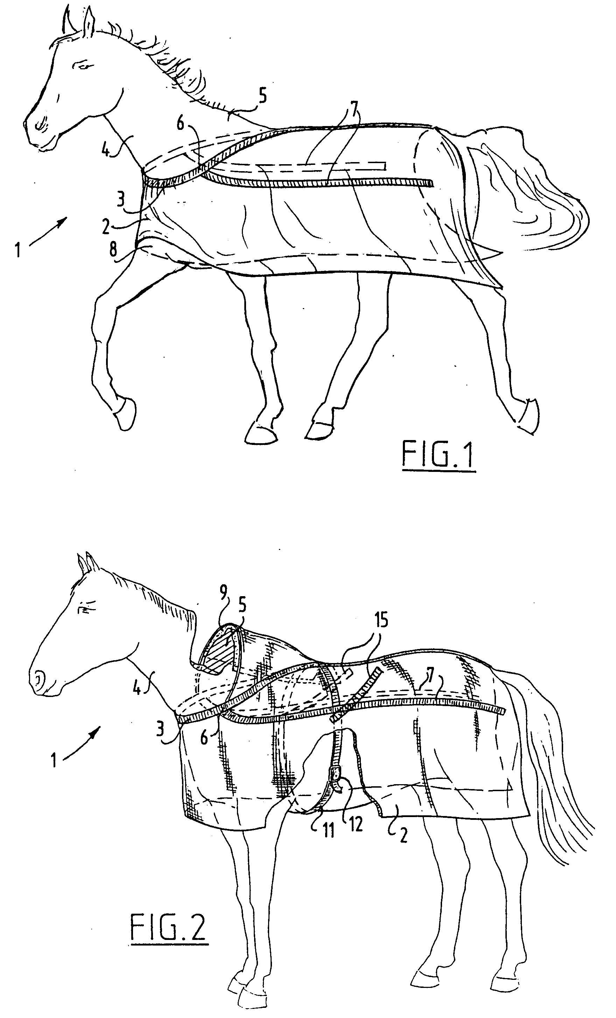

Shown in fig. 1 is a horse 1 which is wearing a horse blanket 2. The horse blanket 2 comprises a girth 3 which is guided on the front part of the horse along the underside of the neck 4 of the horse. The girth 3 extends therefrom to the rear on either side of the body of the horse, wherein the girth 3 is guided slightly upward, both girth halves extend along the withers 5 of the horse and meet behind the withers. From the point of contact both girths extend toward the rear over the back of the horse. It is of course possible for one of the girths to be omitted here so that only a single girth extends along the back of the horse.

Secondary girths 7 extend on either side from a position 6 at the side of the neck 4 of the horse. Both secondary girths 7 are connected to girth 3.

A length of soft, flexible material, for instance wool, jute or a plastic, is then connected to the girths in the usual manner so that the material forms the actual horse blanket 2. The material is herein connected to the girth and the secondary girths, for instance by stitching. In this embodiment it is, just as in the other embodiments, possible that the girths are connected to the horse blanket only at their ends.

When the horse walks, the shoulder joints 8 of the horse will, as can be seen in fig. 1, move forward alternatingly, which has no effect on the horse blanket because at this position the horse blanket is cut very loose fitting so that this movement is possible without obstructing the animal. The location at which the girth 3 rests on the front part of the horse is generally at rest, so that a good fixing of the girth 3 is obtained and thus also of the secondary girths 7 and the actual horse blanket. The girths 3 and 7 are pulled tight by the rearward directed force generally caused by the coat of the horse so that the danger of slipping down is avoided.

In the embodiment shown in fig. 2, a filler piece 9 is arranged on the withers 5 of the horse.

This filler piece provides an additional fixation of the horse blanket on the horse. In preference the filler piece 9 is connected to the blanket by means of stitched seams.

Another difference from the embodiment shown in fig. 1 lies in the tertiary girths 15 extending obliquely upward and rearward. These extend initially at an angle of between 90° and 30°, preferably between 70° and 50°, and in particular roughly 60° to the horizontal. During the further progression of the tertiary girth the path is determined more by the bulging of the rib-cage of the horse. What is essential is that the ends of the girths are not connected to the back seam. These girths exert an additional force so that pulling askew of the blanket is prevented.

The embodiment shown in fig. 2 differs further in the fact that a stomach girth 11 is arranged which is closed by means of a buckle 12. This provides an extra fixation.

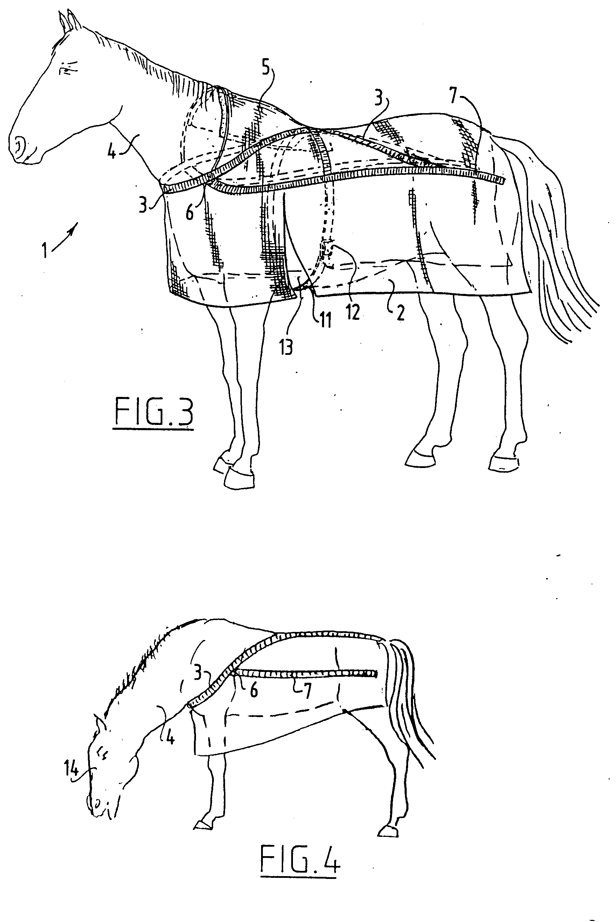

The embodiment depicted in fig. 3 is distinguished by the fact that the girth 3 is arranged intersecting, that is, the girth 3 crosses over itself behind the withers 5 of the horse and then extends downward in the original direction. Experience has shown that this exerts a compensating action in the case of possible small movements of the neck of the horse, so that pulling askew is prevented. The girth 3 is therefore connected at its end to the secondary girth 7.

In this embodiment a split 13 is arranged in the material of the horse blanket, which gives the shoulder joint sufficient clearance space.

Further, fig. 4 shows how the neck moves slightly downward when the head 14 of the horse is moved downward. A forwardly directed force is thus exerted on the horse blanket. This force pulls the blanket as a whole slightly forward, but this can be considered as a correction of the force exerted by the coat of the horse on the horse blanket.

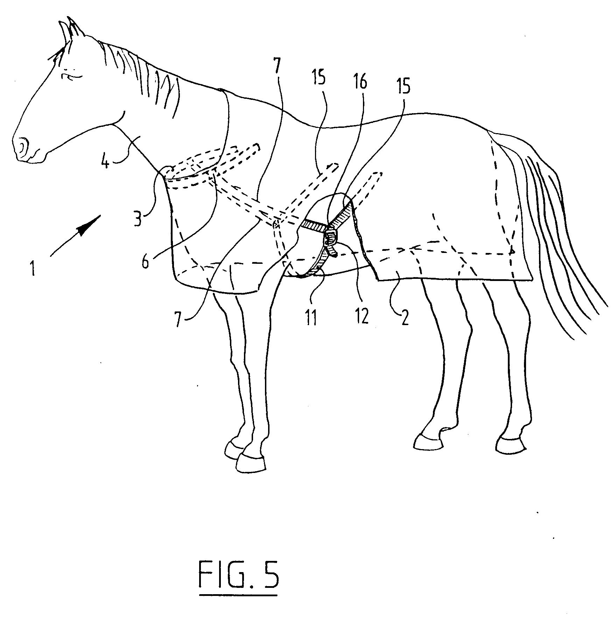

The fourth embodiment of the horse blanket 2 shown in fig. 5 distinguishes by the measure that the secondary girths 7 have a limited length, and extend obliquely downwardly from the connection point 6. This appears to have a good effect on the fixation of the horse blanket 2 on horse 1, in which further the nuisance for the animal is as small as possible. To further enhance the fixation, tertiary girths 15 extend from the end of the secondary girths 7. These are equivalent to the tertiary girths 15 which have been depicted in fig. 2, although the location has been changed as a consequence of the fact that the primary girths 7 extend to the rear and downwardly. Also at the location 16 where the tertiary girths 15 are connected with the secondary girths 7, the girth 11 is connected with the help of a buckle 12.

Also in this embodiment the girths are provided at the inner side of the horse blanket. It is also possible to provide the girths, for instance in the case of a multiply horse blanket, between several of those plies, so that the girths are incorporated within the horse blanket itself.

It is also possible to replace combinations of mutually connected girths or parts of girths by substantially triangular pieces of cloth, which are, just as the girths, produced from relatively inelastic material.

## Claims

1. Horse blanket (2) comprising a blanket manufactured from flexible material, the form of which, when in use on a horse, is substantially adapted to the form of the horse, comprising substantially symmetrical fixation means (3) connected with the blanket, which, when the blanket is in use on a horse, exert a force on the blanket substantially in the direction of the front of the horse, said fixation means being formed by a primary girth (3), consisting of two substantially symmetrical primary girth halves and connected to the horse blanket, **characterized in that** said primary girth (3), when the blanket is used on a horse, is guided from the front part of the horse along the underside of the neck (4) of the horse and extends therefrom towards the rear of the horse on either side of the body of the horse, wherein the primary girth (3) is guided slightly upward and both primary girth halves extend along the withers (5) of the horse.

2. Horse blanket (2) according to claim 1, **characterized by** secondary girths (7) connected with the horse blanket extend rearwardly from the primary girth (3).

3. Horse blanket (2) according to claim 2, **characterized in that** the secondary girths (7) extend obliquely downward and rearward over a limited length.

4. Horse blanket (2) according to claim 2 or 3, **characterized in that** tertiary girths (15) extend from the secondary girths (7) obliquely upward and, which extend, when the blanket (2) is in use on a horse (1), backward over the bulging of the rib cage of the horse (1).

5. Horse blanket (2) according to claim 4, **characterized in that** the tertiary girths (15) end at their upper sides on a distance from the back seam of the horse blanket (2).

6. Horse blanket (2) according to one of the claims 3, 4 or 5, **characterized in that** a girth (11), which, when the blanket (2) is in use on a horse (1), to be guided under the stomach of the horse is connectable to the connection point between the secondary girth (7) and the tertiary girth (15).

7. Horse blanket (2) according to one of the claims 3-6, **characterized in that** the secondary and tertiary girth (7, 15) extend under an angle with a value between 90° and 30°, preferably between 70° and 50°, and in particularly substantially 60° with the horizontal.

8. Horse blanket (2) according to one of the preceding claims, **characterized in that** the girths (3, 7, 15) are only at their ends connected with the blanket (2).

9. Horse blanket (2) according to one of the preceding claims, **characterized in that** the girths (3, 7, 15) extend at the inner side of the blanket (2).

10. Horse blanket according to one of the claims 1-8, **characterized in that** the horse blanket (2) comprises a number of plies, and that the girths (3, 7, 15) have been provided between those plies.

11. Horse blanket (2) according to one of the preceding claims, **characterized in that** the girths (3, 7, 15) are made of material which is less elastic than the material from which the horse blanket (2) is made.

## Patentansprüche

1. Pferdedecke (2) mit einer aus einem flexiblen Material hergestellten Decke, deren Form, wenn sie auf einem Pferd benutzt wird, im wesentlichen an die Form des Pferdes angepaßt ist, mit einem im wesentlichen symmetrischen Befestigungsmittel (3), das mit der Decke verbunden ist, das, wenn die Decke auf einem Pferd in Benutzung ist, eine Kraft auf die Decke im wesentlichen in die Richtung zu der Vorderseite des Pferdes ausübt, wobei das Befestigungsmittel durch einen primären Gurt (3) gebildet ist, der aus zwei im wesentlichen symmetrischen Gurthälften besteht und mit der Pferdedecke verbunden ist, dadurch gekennzeichnet, daß der primäre Gurt (3), wenn die Decke auf einem Pferd in Benutzung ist, von dem vorderen Teil des Pferdes entlang der Unterseite des Halses (4) des Pferdes geführt ist und sich davon zu dem Rücken des Pferdes auf beiden Seiten des Körpers des Pferdes erstreckt, wobei der primäre Gurt (3) leicht nach oben geführt ist und sich beide primären Gurthälften entlang des Widerrists (5) des Pferdes erstrecken.

2. Pferdedecke (2) nach Anspruch 1, gekennzeichnet durch sekundäre Gurte (7), die mit der Pferdedecke verbunden sind und sich nach hinten von dem primären Gurt (3) erstrecken.

3. Pferdedecke (2) nach Anspruch 2, dadurch gekennzeichnet, daß sich die sekundären Gurte (7) schräg nach oben und nach hinten über eine begrenzte Länge erstrecken.

4. Pferdedecke (2) nach Anspruch 2 oder 3, dadurch gekennzeichnet, daß sich tertiäre Gurte (15) von den sekundären Gurten (7) schräg nach oben und die sich, wenn die Decke (2) auf einem Pferd (1) benutzt wird, nach hinten über die Auswölbung des Brustkorbes des Pferdes (1) erstrecken.

5. Pferdedecke (2) nach Anspruch 4, dadaruch gekennzeichnet, daß die tertiären Gurte (15) an deren Oberseiten in einem Abstand von dem Rückensaum der Pferdedecke (2) enden.

6. Pferdedecke (2) nach einem der Ansprüche 3, 4 oder 5, dadurch gekennzeichnet, daß ein Gurt (11), der, wenn die Decke (2) in Benutzung auf einem Pferd (1) ist, unter dem Bauch des Pferdes zu führen ist, und mit dem Verbindungspunkt zwischen dem sekundären Gurt (7) und dem tertiären Gurt (15) verbindbar ist.

7. Pferdedecke (2) nach einem der Ansprüche 3 bis 6, dadurch gekennzeichnet, daß sich der sekundäre und tertiäre Gurt (7, 15) unter einem Winkel mit einem Wert zwischen 90° und 30° bevorzugt zwischen 70° und 50° und insbesondere im wesentlichen 60° zu der Horizontalen erstrecken.

8. Pferdedecke (2) nach einem der vorhergehenden Ansprüche, dadurch gekennzeichnet, daß die Gurte (3, 7, 15) nur an ihren Enden mit der Decke (2) verbunden sind.

9. Pferdedecke (2) nach einem der vorhergehenden Ansprüche, dadurch gekennzeichnet, daß sich die Gurte (3, 7, 15) an der inneren Seite der Decke (2) erstrecken.

10. Pferdedecke nach einem der Ansprüche 1 bis 8, dadurch gekennzeichnet, daß die Pferdedecke (2) eine Zahl von Lagen aufweist und daß die Gurte (3, 7, 15) zwischen diesen Lagen vorgesehen worden sind.

11. Pferdedecke (2) nach einem der vorhergehenden Ansprüche, dadurch gekennzeichnet, daß die Gurte (3, 7, 15) aus Material gemacht sind, das weniger elastisch das Material ist, aus dem die Pferdedecke (2) gemacht ist.

## Revendications

1. Couverture pour chevaux (2) comprenant une couverture fabriquée à partir d'un matériau flexible, dont la forme, lorsqii'on l'utilise sur un cheval, est sensiblement adaptée à la forme du cheval, comprenant un moyen de fixation (3) sensiblement symétrique relié à la couverture, qui, lorsque la couverture est utilisée sur le cheval, exerce une force sur la couverture sensiblement dans la direction de l'avant du cheval, ledit moyen de fixation étant constitué d'un tour de corps primaire (3), composé de deux moitiés de tour de corps primaire sensiblement symétriques et reliées à la couverture pour chevaux, caractérisée en ce que ledit tour de corps primaire (3), lorsqu'on utilise la couverture sur un cheval, est guidé depuis la partie avant du cheval le long du dessous de l'encolure (4) du cheval et s'étend vers l'arrière du cheval de chaque côté du corps du cheval, dans laquelle le tour de corps primaire (3) est guidé légèrement vers le haut et les deux moitiés de tour de corps primaire s'étendent le long des garrots (5) du cheval.

2. Couverture pour chevaux (2) selon la revendication 1, caractérisée en ce que les tours de corps secondaires (7) reliés à la couverture pour chevaux s'étendent vers l'arrière en partant du tour de corps primaire (3).

3. Couverture pour chevaux (2) selon la revendication 2, caractérisée en ce que les tours de corps secondaires (7) s'étendent de manière oblique vers le bas et vers l'arrière sur une longueur limitée.

4. Couverture pour chevaux (2) selon la revendication 2 ou 3, caractérisée en ce que des tours de corps tertiaires (15) s étendent en partant des tours de corps secondaires (7) de manière oblique vers le haut et, lorsque la couverture (2) est utilisée sur un cheval (1), s'étendent vers l'arrière sur le renflement de la cage thoracique du cheval (1).

5. Couverture pour chevaux (2) selon la revendication 4, caractérisée en ce que les tours de corps tertiaires (15) se terminent à leurs côtés supérieurs à une certaine distance de la couture arrière de la couverture pour chevaux (2).

6. Couverture pour chevaux (2) selon l'une quelconque des revendications 3, 4 ou 5, caractérisée en ce qu'un tour de corps (11) qui doit être guidé sous le ventre du cheval, peut être relié, lorsque la couverture (2) est utilisée sur un cheval (1), au point de liaison entre le tour de corps secondaire (7) et le tour de corps tertiaire (15).

7. Couverture pour chevaux (2) selon l'une quelconque des revendications 3 à 6, caractérisée en ce que les tours de corps secondaire et tertiaire (7, 15) s'étendent en faisant un angle avec l'horizontale d'une valeur comprise entre 90° et 30°, de préférence comprise entre 70° et 50°, et en particulier d'environ 60°.

8. Couverture pour chevaux (2) selon l'une quelconque des revendications précédentes, caractérisée en ce que les tours de corps (3, 7, 15) ne sont connectés à la couverture (2) qu'à leurs extrémités.

9. Couverture pour chevaux (2) selon l'une quelconque des revendications précédentes, caractérisée en ce que les tours de corps (3, 7, 15) s'étendent sur le côté intérieur de la couverture (2).

10. Couverture pour chevaux selon l'une des revendications 1 à 8, caractérisée en ce que la couverture pour chevaux (2) comprend un certain nombre de couches, et en ce que les tours de corps (3; 7, 15) sont disposés entre ces couches.

11. Couverture pour chevaux (2) selon l'une quelconque des revendications précédentes, caractérisée en ce que les tours de corps (3, 7, 15) sont réalisés avec un matériau qui est moins élastique que le matériau à partir duquel la couverture pour chevaux (2) est réalisée.
